# EUROPEAN PATENT APPLICATION

(11) **EP 4 746 117 A1**
(43) Date of publication of application: **20.05.2026**
(21) Application number: 25210543.2
(22) Date of filing: 22.10.2025
(51) Int. Cl.: H01M 10/48, H01M 10/613, H01M 10/6567, H01M 10/6568, H05K 7/20

(54) **IMMERSION COOLING MODULE AND CONTROL METHOD USING SAME, AND METHOD FOR COOLING**

(30) Priority: 30.10.2024 KR 20240150971
(71) Applicant: SK Innovation Co., Ltd., Seoul 03188 (KR); SK On Co., Ltd., Seoul 03161 (KR)
(72) Inventor: JUNG, In Sik, 34124 Daejeon (KR); MIN, Gi Hong, 34124 Daejeon (KR)
(74) Representative: Prüfer & Partner mbB Patentanwälte · Rechtsanwälte

(57) **Abstract**

Disclosed are an immersion cooling module and a control method using the same, as well as a method for controlled cooling. The immersion cooling module includes a receiving unit in which at least one cooling fluid is contained and in which at least one battery cell is immersed, at least one support unit which is arranged to partition the receiving unit into a first space in which a first cooling fluid is contained at one side and a second space in which a second cooling fluid is contained at the other side, and to which the at least one battery cell is respectively coupled, and at least one circulator coupled such that the first space at one side of the support unit and the second space at the other side of the support unit are arranged to be connected to communicate with each other, so that the first cooling fluid and the second cooling fluid are mixable with each other and/or are allowed to mutually flow between the first and second spaces.

## Description

### Technical Field

The present disclosure relates to an immersion cooling module and a control method using the same. The present disclosure further relates to a method for cooling one or more battery cells by utilizing two cooling fluids.

### Description of Related Art

Recently, as mobile information terminals such as mobile phones and laptops have become smaller and lighter, and as higher capacity is required for electric vehicles and hybrid vehicles, various batteries have been developed and used as power sources.

As the efficiency of secondary batteries becomes increasingly important depending on their application, some problems arise due to various external environments, such as heat generation and fire during charging or operations.

Accordingly, various technologies have been developed to improve the operational efficiency of such secondary batteries and to ensure safety requirements are met. In addition, there is a growing demand for more efficient mechanisms for operating devices, and for improving cooling methods and maximizing the efficiency, due to the recent increase in carbon emissions and global warming caused by the recent surge in electricity consumption.

### [Related Art Documents]

### [Patent Document]

(Patent Document 1) KR 10-2560884 B1

### SUMMARY

According to one aspect of the present disclosure, there is provided an immersion cooling module capable of effectively maintaining the cooling performance of cooling fluids through the flow of the cooling fluids in a separate space in which the inflow and outflow directions of the cooling fluid(s) for cooling a battery cell are different from each other.

According to another aspect of the present disclosure, there is provided a control method for an immersion cooling module capable of maximizing the cooling performance of cooling fluids by appropriately controlling the flow of the cooling fluids and the flow direction thereof in a separate space in which the inflow and outflow directions of the cooling fluid for cooling a battery cell are different from each other.

An immersion cooling module according to a general aspect of the present disclosure includes: a receiving unit in which at least one cooling fluid is contained and in which at least one battery cell is immersed; at least one support unit which is arranged to partition the receiving unit into a first space in which a first cooling fluid is contained at one side and a second space in which a second cooling fluid is contained at the other side, and to which at least one battery cell is respectively coupled; and at least one circulator coupled such that the first space at one side of the support unit and the second space at the other side of the support unit are arranged to be connected to communicate with each other, so that the first cooling fluid and the second cooling fluid are mixable with each other and/or are allowed to mutually flow between the first space and the second space.

In an exemplary embodiment, the module may further comprise: at least one porous moisture-absorbing member disposed between a coupling surface of the at least one support unit and the at least one battery cell, the at least one battery cell may be arranged to be coupled to the at least one support unit through the at least one porous moisture-absorbing member.

In addition, the circulator may include a first screw formed in a region of the first space, a second screw formed in a region of the second space, a rotation shaft to which the first screw and the second screw are coupled, and a support plate having at least one through-hole formed therein, in which the first space and the second space are arranged to be connected to communicate with each other; the rotation shaft may be rotatably connectable to a driving device, the driving device may be connectable to the at least one support unit.

In addition, the module may further comprise:
a first inlet unit that is configured to introduce the first cooling fluid at one end of the first space, a first outlet unit that is configured to discharge the first cooling fluid at the other end of the first space, a second inlet unit that is configured to introduce the second cooling fluid at one end of the second space and a second outlet unit that is configured to discharge the second cooling fluid at the other end of the second space,
wherein an inflow and outflow direction defined by the second inlet unit and the second outlet unit is opposite to an inflow and outflow direction defined by the first inlet unit and the first outlet unit.

In addition, the through-holes of the at least one support plate may be configured to be formed in a circular shape in a plurality along a circumferential direction of each of the at least one support plate.

For example, the through-holes of the at least one support plate may be symmetrically arranged around a center of each of the at least one support plate and/or may respectively have the same cross-sectional area.

In a further embodiment, the rotation shaft may extend perpendicularly through the center of the at least one support plate.

A control method for an immersion cooling module according to an a general aspect of the present disclosure comprises the following steps: measuring, by a first temperature sensor and a second temperature sensor, a temperature respectively at a first space side and a second space side of a plurality of circulators that are arranged to connect a first space containing a first cooling fluid and a second space containing a second cooling fluid to communicate with each other, determining whether a temperature difference between the first space side and the second space side exceeds a predetermined threshold; driving a first circulator when the temperature difference between the first space side and the second space side exceeds the predetermined threshold such that the first circulator at a point where the temperature difference is measured can allow the first or second cooling fluid of the first space side or the second space side - where the temperature is lower - to flow into the second space side or the first space side where the temperature is higher; and driving a second circulator that is disposed adjacent to a direction in which the second cooling fluid or the first cooling fluid flows from a second inlet unit to a second outlet unit or from a first inlet unit to a first outlet unit in the second space side or the first space side where the temperature is higher, respectively, such that the second cooling fluid or the first cooling fluid can flow in a direction from the second space side or the first space side where the temperature is higher to the first space side or the second space side where the temperature is lower, respectively.

In an exemplary embodiment, the step of driving of the first circulator when the temperature difference between the first space side and the second space side exceeds the predetermined threshold such that the first circulator at the point where the temperature difference is measured allows the first or second cooling fluid of the first space side or the second space side - where the temperature is lower - to flow into the second space side or the first space side where the temperature is higher may further include: selecting any one point among a plurality of points in the first and second spaces which has the largest temperature difference of a temperature in the first space and a temperature in the second space, when the temperature difference between the first space side and the second space side exceeds the predetermined threshold.

In a further embodiment, the step of determining whether the temperature difference between the first space side and the second space side exceeds the predetermined threshold may further include: measuring the temperature of the first cooling fluid in the first space side and the temperature of the second cooling fluid in the second space side in real time at a plurality of points - where the at least one circulator that is configured to enable the first space side and the second space side to communicate with each other is arranged to be coupled - and for measuring the difference therebetween.

In another general aspect, a method for cooling one or more battery cells is provided, which comprises immersing the one or more battery cells in a first cooling fluid and a second cooling fluid respectively provided in a first space and a second space of a receiving unit receiving the one or more battery cells, wherein the first and second spaces are separated from each other but still allow fluid communication between the first and second spaces, so that the first and second cooling fluids are allowed to be mixed with each other and/or are allowed to mutually flow between the first space and the second space, and wherein different inflow and outflow directions of the first and second cooling fluids are respectively applied to the first and second spaces. Herein, preferably, the inflow and outflow directions may be opposite to each other.

In an exemplary embodiment, the first and second cooling fluids may be controlled to mutually flow between the first space and the second space while otherwise being spatially partitioned between the first and second spaces.

In an exemplary embodiment, the first and second cooling fluids may be different heterogeneous cooling fluids.

In another general aspect, a module and/or a control method according to the above-described aspects and embodiments may be used for the controlled cooling of one or another battery cell individually among a plurality of battery cells.

In a further general aspect, in a module and/or a control method and/or a method according to the above-described aspects and embodiments may be used for cooling of data centers, servers, and/or high-performance computing systems. Accordingly, in a module and/or a control method and/or a method according to the above-described aspects and embodiments, the at least one battery cell may be replaced by at least one data center(s), server(s), and/or high-performance computing system(s).

The features and advantages of the present disclosure will become more apparent with the following detailed description based on the accompanying drawings.

Prior to this, terms or words used in the present specification and claims should not be interpreted in a conventional and dictionary sense, but should be construed in accordance with the meaning and concept corresponding to the technical spirit of the present disclosure on the basis of the principle that the inventor can appropriately define the concept of the term to explain his or her invention in the best way.

According to an exemplary embodiment of the present disclosure, there is an effect of maximizing the cooling efficiency according to the flow direction of the cooling fluid.

In addition, there is an effect of controlling the flow of the cooling fluid according to the temperature of the cooling fluid, the rise in temperature of the object to be cooled, and the degree of cooling, by adjusting the flow direction of the cooling fluid.

In addition, there is an effect of reducing power consumption by increasing the overall energy efficiency of devices and of reducing the carbon emissions associated with the operation of related devices, by improving the cooling effect according to the flow direction of the cooling fluid and effectively controlling the flow direction of the cooling fluid to maximize the cooling efficiency.

### BRIEF DESCRIPTION OF THE DRAWINGS

FIG. 1 is a schematic cross-sectional view of an immersion cooling module according to an exemplary embodiment of the present disclosure.
FIG. 2 is an enlarged view of part A of FIG. 1.
FIG. 3 is a schematic diagram of a configuration of a circulator according to an exemplary embodiment of the present disclosure.
FIG. 4 is a flowchart illustrating a control method of an immersion cooling module according to an exemplary embodiment of the present disclosure.
FIG. 5 is a view illustrating a first operation by a control method of an immersion cooling module according to an exemplary embodiment of the present disclosure.
FIG. 6 is a view illustrating a second operation by a control method of an immersion cooling module according to an exemplary embodiment of the present disclosure.

### DETAILED DESCRIPTION OF THE DISCLOSURE

The term used to describe an exemplary embodiment of the present disclosure may not be intended to limit the present disclosure. It should be noted that singular expressions include plural expressions unless otherwise specified in the context.

When assigning reference numbers to components in drawings, identical components may be assigned the same reference numbers as far as possible, even when appearing on different drawings, and similar components may be assigned similar reference numbers.

The drawings may be schematic or exaggerated for the purpose of describing exemplary embodiments. In the present specification, expressions such as "have", "may have", "include", or "may include" may refer to the presence of the corresponding feature (e.g., a numerical value, function, operation, or component such as a part) and may not exclude the presence of additional features.

The terms such as "one," "other," "another," "first," and "second" may be used to distinguish one component from another component, and the components may not be limited by the terms.

Hereinafter, an exemplary embodiment of the present disclosure will be described in detail with reference to the accompanying drawings.

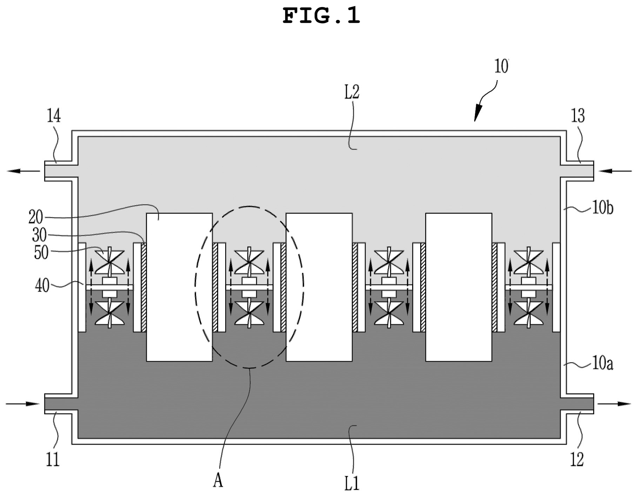

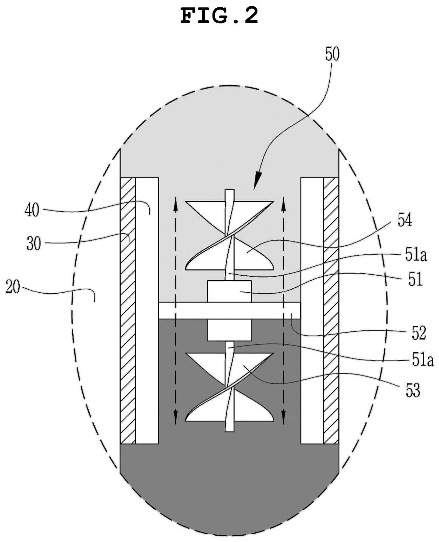

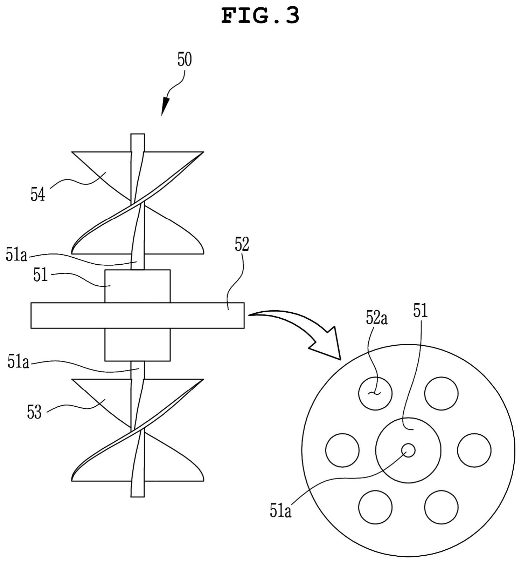

FIG. 1 is a schematic cross-sectional view of an immersion cooling module according to an exemplary embodiment of the present disclosure, FIG. 2 is an enlarged view of part A of FIG. 1, and FIG. 3 is a schematic diagram of a configuration of a circulator 50 according to an exemplary embodiment of the present disclosure.

An immersion cooling module according to an exemplary embodiment of the present disclosure may include a receiving unit 10 in which at least one cooling fluid (L1, L2) is contained and in which at least one battery cell 20 is immersed, at least one support unit 40 which partitions the receiving unit 10 into a first space 10a, in which a first cooling fluid (L1) is contained, at one side and a second space 10b, in which a second cooling fluid (L2) is contained, at the other side, and to which at least one battery cell 20 is coupled, and at least one circulator 50 coupled to the at least one support unit 40 to be operated such that the first cooling fluid (L1) and the second cooling fluid (L2) can flow with each other by connecting the first space 10a and the second space 10b of the support unit 40 to communicate with each other.

As illustrated in FIG. 1, the receiving unit 10 may form a space in which the cooling fluids (L1, L2) are contained and in which the at least one battery cell 20 is immersed. Herein, the object immersed in the cooling fluids (L1, L2) may be described as the battery cell 20 by way of example, but it is obvious that a data center including a large-sized device or system other than the battery cell 20 can be applied in consideration of the size or specifications of the immersion cooling module, for example.

As illustrated in FIG. 1, the at least one support unit 40 may be coupled inside the receiving unit 10 so as to partition upper and lower spaces of the receiving unit 10. The coupling form of the support unit 40 and the shape of the support unit 40 may not be limited to those illustrated, and it is obvious to be appropriately arranged so as to form a flow of the cooling fluid (L1, L2) in the two spaces.

In an exemplary embodiment of the present disclosure, the support unit 40 may be described as being coupled so as to partition a first space 10a, which is a lower space, and a second space 10b, which is an upper space. The first space 10a and the second space 10b may be formed as physically separated spaces, and allow the cooling fluids (L1, L2), that is, the first cooling fluid (L1) and the second cooling fluid (L2), to individually flow into each space.

That is, as illustrated in FIG. 1, a first inlet unit 11 through which the first cooling fluid (L1) flows in at one end of the first space 10a and a first outlet unit 12 through which the first cooling fluid (L1) is discharged at the other end may be respectively formed at one side and the other side, so as to form the flow direction of the cooling fluids (L1, L2).

Separately from this, an inlet unit and an outlet unit may be respectively formed in the second space 10b in a way opposite to those of the first space 10a. That is, a second inlet unit 13 through which the second cooling fluid (L2) is introduced may be formed in the second space 10b in a way opposite to the first inlet unit 11 of the first space 10a, and a second outlet unit 14 through which the second cooling fluid (L2) is discharged may be formed in the second space 10b in a way opposite to the first outlet unit 12 of the first space 10a.

The first cooling fluid (L1) and the second cooling fluid (L2) may be different heterogeneous cooling fluids (L1, L2), but may also be the same homogeneous cooling fluids (L1, L2).

When cooling fluids (L1, L2) different from each other are applied, it is possible to appropriately select and apply relevant conditions, such as the arrangement of the physical spaces of the first space 10a and the second space 10b, the possibility of mixing between the fluids for allowing the first cooling fluid (L1) and the second cooling fluid (L2) to be smoothly mixed and flow, the difference in specific gravity between the fluids, and/or, for example, control parameters related to thermal conductivity, viscosity, boiling point, chemical compatibility and/or safety.

The cooling fluids (L1, L2) may be applied by a non-conductive fluid that prevents electricity from flowing through the immersed electronic product, such as the battery cell 20, a server, and/or other high-performance computing systems. For example, the cooling fluids (L1, L2) may include base oils. The base oil may include a mineral oil, and may include Poly Alpha Olefin (PAO) and/or an ester base oil. However, the cooling fluids (L1, L2) of the present disclosure may not be limited thereto, and may include all fluids capable of cooling battery cells, servers and/or other computing systems.

The at least one support unit 40 may be formed to partition an inner space of the receiving unit 10 into the first space 10a and the second space 10b, and to allow the battery cell 20 to be coupled thereto. In the present disclosure, an example in which the at least one battery cell 20 is coupled to the at least one support unit 40 is illustrated, but the support unit(s) 40 may be physically fixedly coupled to other devices, such as coolable electronic devices or servers, so that immersion cooling can be effectively performed inside the receiving unit 10.

Since the battery cell(s) 20 to be cooled is/are coupled to the support unit(s) 40 and fixed at each position, the flow direction of the first cooling fluid (L1) and the second cooling fluid (L2) may be appropriately adjusted according to the temperature and/or the flow state of the cooling fluids (L1, L2) at each point, or mixed flow of the cooling fluids (L1, L2) may be induced, thereby effectively cooling the battery cell(s) 20 fixed at each point inside the receiving unit 10.

Herein, a porous moisture-absorbing member 30 may be coupled to a coupling surface where each of the at least one battery cell 20 and the support unit 40 are coupled. By coupling the porous moisture-absorbing member 30, a buffering effect may be achieved at the coupling portion between each of the at least one battery cell 20 and the support unit 40, so it is possible to appropriately respond to the expansion or physical deformation of the battery cell(s) 20. This may be particularly relevant during fast charging of the battery cell(s) 20. In addition, there is an effect that as the cooling fluids (L1, L2) are absorbed by capillary action into the porous moisture-absorbing member 30, the outer circumferential surface of each of the at least one battery cells 20 can be cooled, and each of the at least one battery cells 20 can be cooled again through the latent heat generated in the process in which the cooling fluids (L1, L2) are vaporized due to the heat generated from the battery cell(s) 20.

Each of the at least one circulator 50 may be driven by being coupled to at least one point on the support unit 40 so that the first cooling fluid (L1) and the second cooling fluid (L2) of the first space 10a and the second space 10b partitioned by the support unit 40 can be mutually mixed and flowed.

As illustrated in FIG. 2, the circulator 50 may include a first screw 53 immersed in the first cooling fluid (L1) of the first space 10a and a second screw 54 immersed in the second cooling fluid (L2) of the second space 10b.

The first screw 53 and the second screw 54 may be coupled to the rotation shaft 51a, and the rotation shaft 51a may be coupled to the driving device 51 to be rotatably driven, thereby enabling the flow direction of the first cooling fluid (L1) and the second cooling fluid (L2) to be determined according to the rotation direction. It is noted that the first screw 53 and the second screw 54 may also be configured and/or referred to as first and second rotor blades.

The rotation shaft 51a may extend perpendicularly or almost perpendicularly through the center of the at least one support plate 52. This may improve and/or accelerate mixing of the first and second cooling fluids L1, L2.

Referring to Fig. 1 and Fig. 2, in particular, in a method for cooling one or more battery cells 20, first and second cooling fluids L1, L2 may be provided, which are arranged to be respectively disposed in first and second spaces 10a, 10b which, in turn, may be configured to be separated from each other and may further be configured to allow fluid communication between the first and second spaces 10a, 10b, so that the first and second cooling fluids L1, L2 may be mixed with each other in a controlled manner. Herein, opposite inflow and outflow directions of the first and second cooling fluids L1, L2 may respectively be applied to the first and second spaces 10a, 10b in order to improve cooling efficiency through accelerating thermal equilibration between different points or regions located within the first space 10a and the second space 10b. In addition, the first and second cooling fluids L1, L2 may further be allowed to mutually flow between the first space 10a and the second space 10b by at least one circulator 50 which is arranged to partition the first and second spaces 10a, 10b. Optionally, the first and second cooling fluids L1, L2 may be configured to be different heterogeneous cooling fluids, which may further lead to an increased cooling efficiency and/or improved control over fluid properties such as viscosity.

Specifically, as illustrated in FIG. 3, the circulator 50 may include a first screw 53 formed in a region of the first space 10a, a second screw 54 formed in a region of the second space 10b, a rotation shaft 51a in which the first screw 53 and the second screw 54 are coupled, and a support plate 52 having at least one through-hole 52a formed therein in which the first space 10a and the second space 10b are connected to communicate with each other by allowing the rotation shaft 51a to be rotatably coupled to a driving device 51 and the driving device 51 to be coupled to the support unit 40.

That is, the support plate 52 may be coupled to the support unit 40 at a boundary portion between the first space 10a and the second space 10b, and the driving device 51 may be coupled to the support plate 52. The driving device 51 may include, for example, a motor driving device, and additionally, various other rotation driving devices may be applied so as to rotatably drive the rotation shaft 51a.

The driving device 51 may be coupled to the support plate 52, and the driving device 51 may be coupled to enable the rotation shaft 51a to rotate so that the first screw 53 and the second screw 54 can be rotated.

By simultaneously driving the first screw 53 and the second screw 54 in a direction in which the rotation shaft 51a rotates, the first cooling fluid (L1) may flow from the first space 10a to the second space 10b or the second cooling fluid (L2) may flow from the second space 10b to the first space 10a in the opposite direction.

The movement directions of the cooling fluids according to the rotation direction of the first screw 53 and the second screw 54 may be formed to be the same, so that the flow of the cooling fluids (L1, L2) can be controlled by adjusting the rotation direction of the single rotation shaft 51a.

As illustrated in FIG. 3, the support plate 52 may be formed with at least one through-hole 52a that enables the first space 10a and the second space 10b to be connected and communicate with each other when the first screw 53 and the second screw 54 are driven and the cooling fluids (L1, L2) flow. The cooling efficiency may be maximized by adjusting the amount or speed of the cooling fluids (L1, L2) introduced per unit time depending on the shape, number and/or size or cross-sectional area of the through-hole 52a.

It is obvious that the through-holes 52a of the support plate 52 may be formed as a plurality of circular through-holes 52a spaced apart from each other along the circumferential direction of the support plate 52 and may be formed as through-holes 52a of shapes different from each other by varying their diameters. In addition, it is possible to improve the cooling efficiency by determining the size and number of appropriate through-holes 52a depending on the arrangement position of the circulator 50, that is, the temperature of the cooling fluids (L1, L2) in accordance with the flow of the first cooling fluid (L1) and the second cooling fluid (L2), or the degree of heat generated by the battery cell 20 coupled to each point of the support unit 40.

It is possible to control a flow rate of the cooling fluids (L1, L2) passing through the support plate 52 per unit time by adjusting the area of the through-hole 52a through which the cooling fluid (L1, L2) flows mutually between the first space 10a and the second space 10b, and it is also possible to control a total amount of the cooling fluids (L1, L2) passing per unit time by adjusting the total area of the through-hole 52a.

As noted above, the first and second screws 53, 54 may also be configured and/or referred to as first and second rotor blades.

In a further embodiment, the driving device 51, rotating shaft 51a, and/or the support plate 52 may comprise one or more bearings or sealings to reduce friction and/or prevent leakage between the two compartments, respectively.

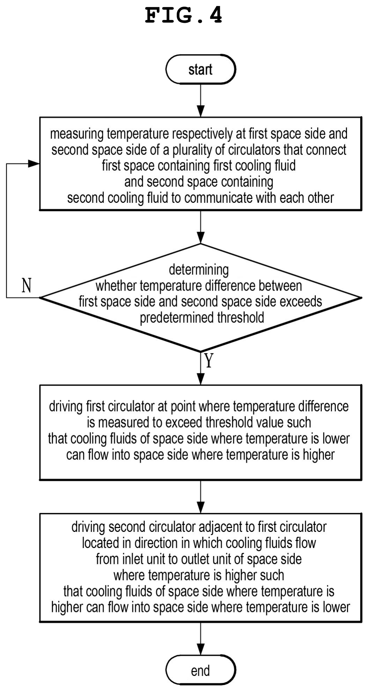

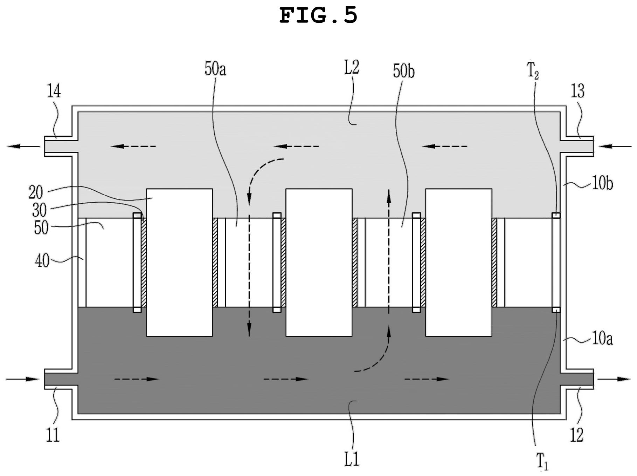

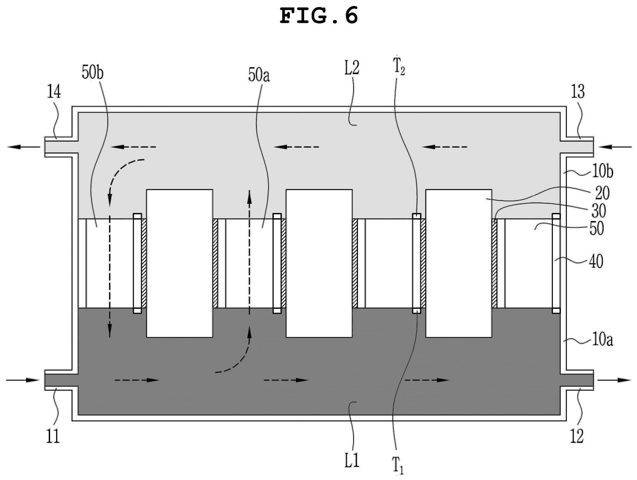

FIG. 4 is a flowchart illustrating a control method of an immersion cooling module according to an exemplary embodiment of the present disclosure, FIG. 5 is a view illustrating a first operation by a control method of an immersion cooling module according to an exemplary embodiment of the present disclosure, and FIG. 6 is a view illustrating a second operation by a control method of an immersion cooling module according to an exemplary embodiment of the present disclosure.

A control method for an immersion cooling module according to an exemplary embodiment of the present disclosure may include measuring a temperature respectively at a first space 10a side and a second space 10b side of a plurality of circulators 50 that connect the first space 10a containing a first cooling fluid (L1) and the second space 10b containing a second cooling fluid (L2) to communicate with each other, determining whether a temperature difference between the first space 10a side and the second space 10b side exceeds a predetermined threshold; driving a first circulator 50a when the temperature difference between the first space 10a side and the second space 10b side exceeds the predetermined threshold such that the first circulator 50a at the point where the temperature difference is measured can allow a first or second cooling fluid (L1, L2) of the first space 10a side or the second space 10b side - where the temperature is lower - to flow into the second space 10b side or the first space 10a side where the temperature is higher; and driving a second circulator 50b adjacent to a direction in which the second cooling fluid (L2) or the first cooling fluid (L1) flows from the second inlet unit 13 to the second outlet unit 14 or from the first inlet unit 11 to the first outlet unit 12 in the second space 10b side or the first space 10a side, respectively, where the temperature is higher, such that the second cooling fluid (L2) or the first cooling fluid (L1) can flow in a direction from the second space 10b side or the first space 10a side where the temperature is higher to the first space 10a side or the second space 10b side where the temperature is lower.

As illustrated in FIG. 5, first, the temperatures of the first space 10a side and the second space 10b side of at least one circulator 50 that connects the first space 10a containing the first cooling fluid (L1) and the second space 10b containing the second cooling fluid (L2) to communicate with each other may be measured using a first temperature sensor (T1) and a second temperature sensor (T2), respectively. The first and/or second temperature sensor(s) (T1, T2) may be selected from thermocouples, resistance temperature detectors (RTDs), thermistors, infrared (IR) sensors, fiber optic sensors, bimetallic thermometers, and semiconductor temperature sensors.

In an exemplary embodiment of the present disclosure, the flow direction of the first cooling fluid (L1) in the first space 10a and the flow direction of the second cooling fluid (L2) in the second space 10b may be designed to be mutually opposite. The temperature of the cooling fluids (L1, L2) may be lowest at the inlet portion, and as the flow direction progresses while gradually cooling the battery cell(s) 20, the temperature of the cooling fluids (L1, L2) may gradually increase, thereby reducing the cooling efficiency.

Accordingly, by allowing the first cooling fluid (L1) and the second cooling fluid (L2) to flow in opposite directions in the first space 10a and the second space 10b, respectively, it is possible to maximize the cooling efficiency of the battery cell 20 immersed within the receiving unit 10.

By measuring the temperature difference between the first cooling fluid (L1) and the second cooling fluid (L2) at the point where the circulator 50 is coupled so that the first space 10a and the second space 10b are connected to communicate with each other, it is possible to effectively check the heat generation state or the cooling efficiency state of the battery cell(s) 20. In addition, since the temperature difference at the point where the circulator 50 is disposed can be measured, it is desirable to install and couple the circulator 50 at appropriate positions and intervals in consideration of this when arranging the circulator 50.

The following section relates to a determination whether a measured value of a temperature difference between the first space 10a side and the second space 10b side exceeds a predetermined threshold.

A temperature range of the first cooling fluid (L1) according to a flow direction of the first cooling fluid (L1) and a temperature range of the second cooling fluid (L2) according to a flow direction of the second cooling fluid (L2) may be formed within a predetermined range. Accordingly, when a mutual temperature difference between the first cooling fluid (L1) and the second cooling fluid (L2) at each position exceeds a threshold value, it can be determined that the heat generation of the battery cell(s) 20 at the corresponding position, in whole or in part, has rapidly increased. By way of example, the threshold value may be considered to be exceeded when the condition continues for at least one second; however, the applicable duration may vary depending on the cooling module employed. Since the battery cell 20 extends across both the first space 10a side and the second space 10b side, the temperature difference between the first cooling fluid (L1) and the second cooling fluid (L2) of the first space 10a and the second space 10b may be rapidly increased due to a heat generation problem at a position close to the boundary surface.

Herein, it is obvious that the threshold value for the temperature difference between the first space 10a side and the second space 10b side may be set differently at each point in the direction in which the cooling fluid flows.

When the measured value of the temperature difference between the first space 10a side and the second space 10b side exceeds the predetermined threshold, the first circulator 50a may operate at the point, which in the present disclosure refers to the point where the circulator is coupled and where the temperature difference is measured by the first and second temperature sensors (T1, T2), where the temperature difference is measured to exceed the threshold value.

That is, the first circulator 50a at such point may drive the first cooling fluid (L1) or the second cooling fluid (L2) at the first space 10a side or the second space 10b side, where the temperature is lower, to flow toward the second space 10b side or the first space 10a side, where the temperature is higher.

By allowing the cooling fluids (L1, L2) on the space side - where the temperature is lower - to flow toward the space side where the temperature is relatively higher, the temperature difference between the first space 10a and the second space 10b can be reduced to the maximum extent, thereby maintaining a balance in cooling and effectively responding to heat generation at a specific point inside the entire receiving unit 10 in which multiple battery cells 20 may be provided. Ideally, the temperature difference may be reduced toward zero, i.e., a thermal equilibration between the first and second spaces (10a, 10b) may be realized.

Next, a second circulator 50b adjacent to a direction in which the second cooling fluid (L2) or the first cooling fluid (L1) flows from the second inlet unit 13 to the second outlet unit 14 or from the first inlet unit 11 to the first outlet unit 12 in the second space 10b side or the first space 10a side, respectively, where the temperature is higher, may be driven such that the second cooling fluid (L2) or the first cooling fluid (L1) can flow in a direction from the second space 10b side or the first space 10a side where the temperature is higher to the first space 10a side or the second space 10b side where the temperature is relatively lower.

That is, when the first circulator 50a is driven, the second circulator 50b, adjacent to one direction in which the cooling fluids (L1, L2) in the space into which the cooling fluids (L1, L2) are introduced, may be driven when the cooling fluids (L1, L2) are introduced in a direction where the cooling fluids (L1, L2) flow, that is, the direction where the cooling fluids (L1, L2) in a space with a relatively lower temperature flow into a space with a higher temperature.

For example, as illustrated in FIG. 5, the first cooling fluid (L1) may be contained in the first space 10a at a lower portion of the support unit 40, and the second cooling fluid (L2) may be contained in the second space 10b at an upper portion of the support unit 40.

When the temperature of the first cooling fluid (L1) in the first space 10a is higher than the temperature of the second cooling fluid (L2) in the second space 10b at the point where the first circulator 50a is initially coupled, and the temperature difference exceeds a threshold value, the first circulator 50a may operate.

The first circulator 50a may introduce the second cooling fluid (L2) of the second space 10b where the temperature is relatively lower into the first space 10a where the temperature is higher. In this way, the second cooling fluid (L2) may be introduced into the first space 10a and mixed with the first cooling fluid (L1), thereby lowering the overall temperature of the cooling fluids (L1, L2).

In this case, the second circulator 50b adjacent to the first circulator 50a in a direction from the first inlet unit 11 to the first outlet unit 12, that is, in the direction in which the first cooling fluid (L1) flows in the first space 10a where the temperature is relatively higher may be driven. The second circulator 50b may circulate the cooling fluids (L1, L2) in the opposite direction of the first circulator 50a, from the first space 10a toward the second space 10b, thereby inducing the overall circulation of the cooling fluids (L1, L2) and improving the cooling efficiency.

In addition, as illustrated in FIG. 6, the first circulator 50a can operate when the temperature of the first cooling fluid (L1) in the first space 10a is lower than the temperature of the second cooling fluid (L2) in the second space 10b at the point where the first circulator 50a is coupled, and the temperature difference exceeds the threshold value.

The first circulator 50a may introduce the first cooling fluid (L1) of the first space 10a where the temperature is relatively lower into the second space 10b where the temperature is higher. In this way, the first cooling fluid (L1) may be introduced into the second space 10b and mixed with the second cooling fluid (L2), thereby lowering the overall temperature of the cooling fluids (L1, L2).

In this case, the second circulator 50b adjacent to the first circulator 50a in a direction from the second inlet unit 13 to the second outlet unit 14, that is, in the direction in which the second cooling fluid (L2) flows in the second space 10b where the temperature is relatively higher may operate so that it may circulate the cooling fluids (L1, L2) from the second space 10b toward the first space 10a in the opposite direction of the first circulator 50a, thereby inducing the overall circulation of the cooling fluids (L1, L2) and improving the cooling efficiency.

In addition, in the above-described method, the temperature of the first cooling fluid (L1) in the first space 10a side and the temperature of the second cooling fluid (L2) in the second space 10b side may be conducted in real time and/or at a plurality of points located within the first and the second spaces 10a, 10b. When the temperature difference between the first space 10a side and the second space 10b side exceeds the predetermined threshold, any one point among a plurality of points in the first and second spaces 10a, 10b, which has the largest temperature difference of a temperature in the first space 10a and a temperature in the second space 10b, may be selected.

The above-described module and/or control method may be used for individually controlled cooling of a single battery cell 20 among a plurality of battery cells 20. The above-described module and/or control method may also be used for individually controlled cooling of two or more specific battery cells 20 among a plurality of battery cells 20.

The above-described module, control method and/or cooling method may also be used for controlled cooling of data centers, servers, and/or high-performance computing systems.

As described above, the present disclosure has been described in detail through specific implementation examples. These implementation examples may be intended to specifically illustrate the present disclosure, and the present disclosure may be merely illustrative of the present invention and does not limit the scope of the appended claims and it will be apparent to those skilled in the art that various modifications and variations to the exemplary embodiments are possible within the scope and technical spirit of the present disclosure, and it is also natural that such modifications and variations fall within the scope of the appended claims.

## Claims

1. An immersion cooling module, comprising:
a receiving unit (10) in which at least one cooling fluid (L1, L2) is contained and in which at least one battery cell (20) is immersed;
at least one support unit (40) which is arranged to partition the receiving unit (10) into a first space (10a) in which a first cooling fluid (L1) is contained at one side and a second space (10b) in which a second cooling fluid (L2) is contained at the other side, and to which the at least one battery cell (20) is respectively coupled; and
at least one circulator (50) coupled such that the first space (10a) at one side of the support unit (40) and the second space (10b) at the other side of the support unit (40) are arranged to be connected to communicate with each other so that the first cooling fluid (L1) and the second cooling fluid (L2) are mixable with each other and/or are allowed to mutually flow between the first space (10a) and the second space (10b).

2. The module of claim 1, further comprising:
at least one porous moisture-absorbing member (30) disposed between a coupling surface of the at least one support unit (40) and the at least one battery cell (20), wherein the at least one battery cell (20) is arranged to be coupled to the at least one support unit (40) through the at least one porous moisture-absorbing member (30).

3. The module of claim 1 or 2, wherein the at least one circulator (50) comprises:
a first screw (53) formed in a region of the first space (10a);
a second screw (54) formed in a region of the second space(10b);
a rotation shaft (51a) to which the first screw (53) and the second screw (54) are coupled; and
a support plate (52) having at least one through-hole (52a) formed therein,
wherein the first space (10a) and the second space (10b) are arranged to be connected to communicate with each other, and
wherein the rotation shaft (51a) is rotatably connectable to a driving device (51), the driving device (51) being connectable to the at least one support unit (40).

4. The module of any one of claims 1 to 3, further comprising:
a first inlet unit (11) that is configured to introduce the first cooling fluid (L1) at one end of the first space (10a);
a first outlet unit (12) that is configured to discharge the first cooling fluid (L1) at the other end of the first space (10a);
a second inlet unit (13) that is configured to introduce the second cooling fluid (L2) at one end of the second space (10b); and
a second outlet unit (14) that is configured to discharge the second cooling fluid (L2) at the other end of the second space (10b),
wherein an inflow and outflow direction defined by the second inlet unit (13) and the second outlet unit (14) is opposite to an inflow and outflow direction defined by the first inlet unit (11) and the first outlet unit (12).

5. The module of claim 3 or 4, wherein the through-holes (52a) of the at least one support plate (52) are configured to be formed as a plurality of circular through-holes (52a) along a circumferential direction of each of the at least one support plates (52).

6. The module of claim 5, wherein the through-holes (52a) of the at least one support plate (52) are arranged symmetrically around a center of each of the at least one support plate (52), and/or wherein the through-holes (52a) of the at least one support plate (52) respectively have the same cross-sectional area.

7. The module of claim 6, wherein the rotation shaft (51a) extends perpendicularly through the center of each of the at least one support plate (52).

8. A control method for an immersion cooling module, the method comprising the following steps:
measuring, by a first temperature sensor (T1) and a second temperature sensor (T2), a temperature respectively at a first space (10a) side and a second space (10b) side of a plurality of circulators (50) that are arranged to connect a first space (10a) containing a first cooling fluid (L1) and a second space (10b) containing a second cooling fluid (L2) to communicate with each other;
determining whether a temperature difference between the first space (10a) side and the second space (10b) side exceeds a predetermined threshold;
driving a first circulator (50a) when the temperature difference between the first space (10a) side and the second space (10b) side exceeds the predetermined threshold such that the first circulator (50a), at a point where the temperature difference is measured, allows the first (L1) or second cooling fluid (L2) of the first space (10a) side or the second space (10b) side - where the temperature is lower - to flow into the second space (10b) side or the first space (10a) side where the temperature is higher; and
driving a second circulator (50b) that is disposed adjacent to a direction in which the second cooling fluid (L2) or the first cooling fluid (L1) flows from a second inlet unit (13) to a second outlet unit (14) or from a first inlet unit (11) to a first outlet unit (12) in the second space (10b) side or the first space (10a) side where the temperature is higher, respectively, such that the second cooling fluid (L2) or the first cooling fluid (L1) is allowed to flow in a direction from the second space (10b) side or the first space (10a) side where the temperature is higher to the first space (10a) side or the second space (10b) side where the temperature is lower, respectively.

9. The method of claim 8, wherein the step of driving of the first circulator (50a), when the temperature difference between the first space (10a) side and the second space (10b) side exceeds the predetermined threshold such that the first circulator (50a) at the point where the temperature difference is measured allows the first (L1) or second cooling fluid (L2) of the first space (10a) side or the second space (10b) side - where the temperature is lower - to flow into the second space (10b) side or the first space (10a) side where the temperature is higher, further comprises:
selecting any one point among a plurality of points in the first and second spaces (10a, 10b) which has the largest temperature difference of a temperature in the first space (10a) and a temperature in the second space (10b), when the temperature difference between the first space (10a) side and the second space (10b) side exceeds the predetermined threshold.

10. The method of any one of claims 8 to 9, wherein the step of determining whether the temperature difference between the first space (10a) side and the second space (10b) side exceeds the predetermined threshold further comprises:
measuring the temperature of the first cooling fluid (L1) in the first space (10a) side and the temperature of the second cooling fluid (L2) in the second space (10b) side in real time at a plurality of points - where the at least one circulator (50) that is configured to enable the first space (10a) side and the second space (10b) side to communicate with each other is arranged to be coupled - and for measuring the difference therebetween.

11. A method for cooling one or more battery cells (20), comprising:
immersing the one or more battery cells in a first cooling fluid (L1) and a second cooling fluid (L2) respectively provided in a first space (10a) and a second space (10b) of a receiving unit (10) receiving the one or more battery cells,
wherein the first and second spaces (10a, 10b) are separated from each other but still allow fluid communication between the first and second spaces (10a, 10b), so that the first and second cooling fluids (L1, L2) are allowed to be mixed with each other and/or are allowed to mutually flow between the first space (10a) and the second space (10b), and
wherein different inflow and outflow directions of the first and second cooling fluids (L1, L2) are respectively applied to the first and second spaces (10a, 10b), optionally wherein the inflow and outflow directions are opposite to each other.

12. The method of claim 11, wherein the first and second cooling fluids (L1, L2) are controlled to mutually flow between the first space (10a) and the second space (10b) while otherwise being spatially partitioned between the first and second spaces (10a, 10b),
and/or wherein the first and second cooling fluids (L1, L2) are different heterogeneous cooling fluids.

13. Use of a module according to one of claims 1 to 7, or a control method according to one of claims 8 to 13, for the controlled cooling of one or another battery cell (20) individually among a plurality of battery cells (20).

14. The module according to one of claims 1 to 7, or the method according to claim 12 or 13, wherein the one or more battery cells (20) are replaced by at least one data center(s), server(s), and/or high-performance computing system(s).
